# EUROPEAN PATENT SPECIFICATION

(11) **EP 1 705 593 B1**
(45) Date of publication and mention of the grant of the patent: **18.05.2016**
(21) Application number: 06002269.6
(22) Date of filing: 03.02.2006
(51) Int. Cl.: G06F 21/10, H04N 5/913, H04N 21/2347, H04N 21/442, H04N 21/4405, H04N 21/4627, H04N 21/472, H04N 21/6377, H04N 21/8355

(54) **Hard disk drive system for distributing protected content**
Festplattenlaufwerkssystem zur Verteilung von geschützten Inhalt
Système avec disque dur pour distribuer du contenu protégé

(30) Priority: 21.03.2005 US 85761; 01.07.2005 US 174176
(43) Date of publication of application: 27.09.2006
(73) Proprietor: Marvell World Trade Ltd., St. Michael (BB)
(72) Inventor: Sutardja, Sehat, Los Altos Hills, California 94022 (US)
(74) Representative: Grünecker Patent- und Rechtsanwälte PartG mbB

(56) References cited:
- US-A1- 2002 099 950
- US-A1- 2002 103 964
- US-A1- 2004 213 273

## Description

### CROSS-REFERENCE TO RELATED APPLICATIONS

This application is a continuation of United States Patent Application No. 11/085,761 filed on March 21, 2005. This application is related to United States Patent Application No. 11/039,288 filed on January 19, 2005. The disclosures of the above applications are incorporated herein by reference in their entirety.

### FIELD OF THE INVENTION

The present invention relates to networks, and more particularly to network systems that allow secure distribution of protected content.

### BACKGROUND OF THE INVENTION

Consumers often purchase video content on digital versatile discs (DVDs). A DVD player may be used to output the video content to a television (TV) or other video monitor. Some DVD players may include a carousel for allowing selection and play of one of a plurality of DVDs. In some situations, a consumer may want to view the DVD content on a first TV in one room of the consumer's home when the DVD player is located and connected to a second TV in another room. As a result, the DVD player needs to be disconnected from the second TV, moved to the room with the first TV and reconnected to the first TV. Alternately, if the consumer has a second DVD player, the consumer moves the DVD to the other player.

One possible solution to this problem involves copying the DVD content onto another DVD. DVD players typically include only one DVD player, which makes copying DVDs difficult. To copy the DVD, the user must copy the DVD contents to a hard drive system. Typically, copy protection schemes such as digital rights management (DRM) prevent such copying despite the fact that some copying may be allowed under the copyright laws. This is due, in part, to the fact that the data is decrypted and/or decoded by the DVD player and is therefore in an unprotected form when it is output to other devices. This solution also requires an additional DVD player.

US2002/103964 A1 discloses a disk with multiple hidden storage areas. The disk includes an authentication module which authenticates requests to access hidden areas.

US 2004/213273 A1 discloses a home network which includes a NAS serving audio/video content. The NAS authenticates devices asking for content and evaluates if they should be allowed to play the content or not in accordance with a set of rules.

### SUMMARY OF THE INVENTION

A system for distributing content in a network comprises memory that stores content. A provider network device communicates with the memory. A requester network device requests a copy of the content. the provider network device determines a local/remote status of the requester network device and selectively sends a copy of the content to the requester network device when the requester network device requests content and has a local status.

In other features, the provider network device includes a digital versatile disc (DVD) system. The requester network device includes a hard disk drive (HDD) system. The provider network device includes a local network determining module that determines the local/remote status of the requester network device. The provider network device determines the local/remote status based on a response time of the requester network device.

In other features, a server communicates with the provider network device and stores identification data of local network devices. The provider network device determines the local/remote status based on the identification data. The identification data comprises medium access control (MAC) addresses of the local network devices.

In other features, the HDD system comprises nonvolatile HDD memory that stores data in a nonvolatile manner and that includes a user accessible section and a hidden section. A hard disk drive control (HDD) module communicates with the HDD nonvolatile memory, selectively requests and receives content from the provider network device and stores the requested content in the hidden section of the nonvolatile HDD memory.

In other features, after sending the request to the provider network device, the HDD control module receives a key request and transmits a key to the provider network device in response to the key request. The requested content received by the HDD system from the provider network device is encrypted using the key. The HDD control module decrypts the requested content. The requested content includes usage data that is also written to the hidden portion of the nonvolatile HDD memory and wherein the HDD control module makes the requested content unavailable when the usage data indicates allowable use is over. The HDD system deletes the requested content from the nonvolatile HDD memory. The usage data specifies a predetermined number of allowable uses. The usage data specifies a duration of allowable usage. The HDD system communicates wirelessly with the network. The HDD system communicates with the network over a wired medium.

In other features, the DVD system comprises nonvolatile memory that stores content. A DVD control module communicates with the nonvolatile memory and selectively receives requests for content from the requester network device. The DVD control module requests a key from the requester network device before sending the requested content and determines an amount of time that is required to receive the key from the HDD system after sending the key request to the HDD system. The DVD system sends the requested content to the HDD system if the key is received within a predetermined period. The predetermined period is approximately equal tQ a single or two-hop period. The DVD system encrypts the requested content before sending the requested content to the HDD system. The DVD control module includes usage data in the requested content that is transmitted to the HDD system. The usage data specifies a number of allowable uses. The usage data specifies a duration of allowable usage.

A system for distributing content in a network comprises memory means for storing content. Provider network means for providing communicates with the memory means. Requester network means requests a copy of the content. The provider network means determines a local/remote status of the requester network means and selectively sends a copy of the content to the requester network means when the requester network means requests content and has a local status.

In other features, the provider network means includes a digital versatile disc (DVD) system. The requester network means includes a hard disk drive (HDD) system. The provider network means includes local network determining means for determining the local/remote status of the requester network means. The provider network means determines the local/remote status based on a response time of the requester network means. Server means for serving communicates with the provider network means and stores identification data of local network means. The provider network means determines the local/remote status based on the identification data. The identification data comprises medium access control (MAC) addresses of the local network means.

In other features, the HDD system comprises nonvolatile HDD memory means for storing data in a nonvolatile manner and that includes a user accessible section and a hidden section. Hard disk drive control (HDD) means communicates with the HDD nonvolatile memory means, selectively requests and receives content from the provider network means and stores the requested content in the hidden section of the nonvolatile HDD memory means. After sending the request to the provider network means, the HDD control means receives a key request and transmits a key to the provider network means in response to the key request. The requested content received by the HDD system from the provider network means is encrypted using the key. The HDD control means decrypts the requested content. The requested content includes usage data that is also written to the hidden portion of the nonvolatile HDD memory means and wherein the HDD control means makes the requested content unavailable when the usage data indicates allowable use is over.

In other features, the HDD system deletes the requested content from the nonvolatile HDD memory means. The usage data specifies a predetermined number of allowable uses. The usage data specifies a duration of allowable usage. The HDD system communicates wirelessly with the network. The HDD system communicates with the network over a wired medium.

In other features, the DVD system comprises nonvolatile memory means for storing content. DVD control means communicates with the nonvolatile memory means and selectively receives requests for content from the requester network means. The DVD control means requests a key from the requester network means before sending the requested content and determines an amount of time that is required to receive the key from the HDD system after sending the key request to the HDD system. The DVD control means sends the requested content to the HDD system if the key is received within a predetermined period. The predetermined period is approximately equal to a single or two-hop period. The DVD control means encrypts the requested content before sending the requested content to the HDD system. The DVD control means includes usage data in the requested content that is transmitted to the HDD system. The usage data specifies a number of allowable uses. The usage data specifies a duration of allowable usage. The DVD system communicates wirelessly with the network. The DVD system communicates with the network over a wired medium.

A method for distributing content in a network comprises storing content in memory; providing a provider network device that communicates with the memory; providing a requester network device that requests a copy of the content; determining a local/remote status of the requester network device; and selectively sending a copy of the content to the requester network device when the requester network device requests content and has a local status.

In other features, the provider network device includes a digital versatile disc (DVD) system. The requester network device includes a hard disk drive (HDD) system. The method includes determining the local/remote status of the requester network device. The method includes determining the local/remote status based on a response time of the requester network device. The method includes storing identification data of local network devices, wherein the provider network device determines the local/remote status based on the identification data. The method includes storing medium access control (MAC) addresses of the local network devices. The method includes storing data in a nonvolatile manner in user accessible and a hidden sections of the HDD system; selectively requesting and receiving content from the provider network device; and storing the requested content in the hidden section of the nonvolatile HDD memory.

In other features, the method includes receiving a key request and transmitting a key to the provider network device in response to the key request after sending the request to the provider network device. The method includes encrypting the requested content received by the HDD system from the provider network device using the key. The method includes decrypting the requested content. The method includes writing the requested content includes usage data to the hidden portion of the nonvolatile HDD memory; and making the requested content unavailable when the usage data indicates allowable use is over.

In yet other features, the method includes deleting the requested content from the nonvolatile HDD memory. The method includes specifying a predetermined number of allowable uses using the usage data. The method includes specifying a duration of allowable usage using the usage data. The method includes storing content; and selectively receiving requests for content from the requester network device. The method includes requesting a key from the requester network device before sending the requested content; and determining an amount of time that is required to receive the key from the HDD system after sending the key request to the HDD system.

In other features, the method includes sending the requested content to the HDD system if the key is received within a predetermined period. The predetermined period is approximately equal to a single or two-hop period. The method includes encrypting the requested content before sending the requested content to the HDD system. The method includes transmitting usage data in the requested content to the HDD system. The usage data specifies a number of allowable uses. The usage data specifies a duration of allowable usage.

A hard disk drive (HDD) system that communicates with a provider network device over a network comprises nonvolatile HDD memory that stores data in a nonvolatile manner in user accessible and hidden sections. A hard disk drive control (HDD) module communicates with the HDD nonvolatile memory, selectively requests and receives content from the provider network device and stores the requested content in the hidden section of the nonvolatile HDD memory.

In other features, after sending the request to the provider network device, the HDD control module receives a key request and transmits a key to the provider network device in response to the key request. The requested content received by the HDD system from the provider network device is encrypted using the key. The HDD control module decrypts the requested content. The requested content includes usage data that is also written to the hidden portion of the nonvolatile HDD memory and wherein the HDD control module makes the requested content unavailable when the usage data indicates allowable use is over. The HDD system deletes the requested content from the nonvolatile HDD memory. The usage data specifies a predetermined number of allowable uses. The usage data specifies a duration of allowable usage. The HDD system communicates wirelessly with the network. The HDD system communicates with the network over a medium.

In other features, the provider network device includes a digital versatile disc (DVD) system. A networked DVD/HDD system comprises the HDD system and further comprises the DVD system and the network.

A hard disk drive (HDD) system that communicates with a provider network device over a network comprises nonvolatile memory means for storing data in a nonvolatile manner in user accessible and hidden sections. Control means communicates with the nonvolatile memory means, selectively requests and receives content from the provider network device and stores the requested content in the hidden section of the nonvolatile memory means.

After sending the request to the provider network device, the control means receives a key request and transmits a key to the provider network device in response to the key request. The requested content received by the system from the provider network device is encrypted using the key. The control means decrypts the requested content. The requested content includes usage data that is also written to the hidden portion of the nonvolatile memory means and wherein the control means makes the requested content unavailable when the usage data indicates allowable use is over.

In other features, the system deletes the requested content from the nonvolatile memory means. The usage data specifies a predetermined number of allowable uses. The usage data specifies a duration of allowable usage. The HDD system communicates wirelessly with the network. The HDD system communicates with the network over a medium.

In other features, the provider network device includes a digital versatile disc (DVD) system. A networked DVD/HDD system comprises the HDD system and further comprises the DVD system and the network.

A method for operating a hard disk drive (HDD) system that communicates with a provider network device over a network comprises storing data in a nonvolatile manner in user accessible and hidden sections; selectively requesting and receiving content from the provider network device; and storing the requested content in the hidden section.

In other features, the method includes receiving a key request and transmitting a key to the provider network device in response to the key request after sending the request to the provider network device. The method includes encrypting the requested content received by the HDD system from the provider network device using the key. The method includes decrypting the requested content. The method includes writing requested content including usage data to the hidden portion; and making the requested content unavailable when the usage data indicates allowable use is over. The method includes deleting the requested content from the hidden section. The method includes specifying a predetermined number of allowable uses using the usage data. The method includes specifying a duration of allowable usage using the usage data.

A digital versatile disc (DVD) system that communicates with a requester network device over a network comprises nonvolatile memory that stores content. A control module communicates with the nonvolatile memory, selectively receives requests for content from the requester network device, determines a local/remote status, sends the requested content if the requester network device has a local status and that does not send the requested content if the requester network device has a remote status.

In other features, the control module requests a key from the requester network device before sending the requested content. The control module determines an amount of time that is required to receive the key from the requester network device after sending the key request. The control module sends the requested content to the requester network device if the key is received within a predetermined period. The predetermined period is approximately equal to a single or two-hop period. The control module encrypts the requested content before sending the requested content to the requester network device. The control module includes usage data in the requested content that is transmitted to the requester network device. The usage data specifies a number of allowable uses. The usage data specifies a duration of allowable usage. The DVD system communicates wirelessly with the network. The DVD system communicates with the network over a medium.

In other features, the requester network device includes a hard disk drive (HDD) system. A networked DVD/HDD system comprises the DVD system and further comprises the HDD system and the network.

A digital versatile disc (DVD) system that communicates with a hard requester network device over a network comprises nonvolatile memory means that stores content. Control means communicates with the nonvolatile memory means, selectively receives requests for content from the requester network device, determines a local/remote status, sends the requested content if the requester network device has a local status and does not sends the requested content if the requester network device has a remote status.

In other features, the control means requests a key from the requester network device before sending the requested content. The control means determines an amount of time that is required to receive the key from the requester network device after sending the key request. The control module sends the requested content to the requester network device if the key is received within a predetermined period. The predetermined period is approximately equal to a two-hop period. The predetermined period is approximately equal to a single-hop period. The control module encrypts the requested content before sending the requested content to the requester network device. The control means includes usage data in the requested content that is transmitted to the requester network device. The usage data specifies a number of allowable uses. The usage data specifies a duration of allowable usage. The control module communicates wirelessly with the network. The DVD system communicates with the network over a medium.

In other features, the requester network device includes a hard disk drive (HDD) system. A networked DVD/HDD system comprises the DVD system and further comprises the HDD system and the network.

A method for operating a digital versatile disc (DVD) system that communicates with a hard requester network device over a network comprises storing content in nonvolatile memory; selectively receiving requests for content from the requester network device; determining a local/remote status; sending the requested content if the requester network device has a local status; and not sending the requested content if the requester network device has a remote status.

In other features, the method includes requesting a key from the requester network device before sending the requested content. The method includes determining an amount of time that is required to receive the key from the requester network device after sending the key request. The method includes sending the requested content to the requester network device if the key is received within a predetermined period. The method includes setting the predetermined period approximately equal to a two-hop period. The method includes setting the predetermined period approximately equal to a single-hop period. The method includes encrypting the requested content before sending the requested content to the requester network device. The method includes including usage data in the requested content that is transmitted to the requester network device. The usage data specifies a number of allowable uses. The usage data specifies a duration of allowable usage.

A system for distributing content in a network comprises memory that stores content and a provider network device that communicates with the memory. A media server communicates with the provider network device. A requester network device requests a copy of the content. The media server determines a local/remote status of the requester network device and selectively enables the provider network device to send a copy of the content to the requester network device when the requester network device requests content and has a local status.

In other features, the provider network device includes a digital versatile disc (DVD) system. The requester network device includes a hard disk drive (HDD) system. The media server includes a local network determining module that determines the local/remote status of the requester network device. The media server determines the local/remote status based on a response time of the requester network device.

In other features, a server communicates with the media server and stores identification data of local network devices. The media server determines the local/remote status based on the identification data. Alternately, the media server stores identification data of local network devices, wherein the media server determines the local/remote status based on the identification data. The identification data comprises medium access control (MAC) addresses of the local network devices.

In other features, the HDD system comprises nonvolatile HDD memory that stores data in a nonvolatile manner and that includes a user accessible section and a hidden section. A hard disk drive control (HDD) module communicates with the HDD nonvolatile memory, selectively requests content from the media server and receives content from at least one of the provider network device and/or the media server and stores the requested content in the hidden section of the nonvolatile HDD memory. After sending the request to the media server, the HDD control module receives a key request and transmits a key to at least one of the media server and/or the provider network device in response to the key request. The requested content received by the HDD system from at least one of the provider network device and/or the media server is encrypted using the key. The HDD control module decrypts the requested content. The requested content includes usage data that is also written to the hidden portion of the nonvolatile HDD memory. The HDD control module makes the requested content unavailable when the usage data indicates allowable use is over. The HDD system deletes the requested content from the nonvolatile HDD memory. The usage data specifies a predetermined number of allowable uses. The usage data specifies a duration of allowable usage. The HDD system communicates wirelessly with the network. The HDD system communicates with the network over a wired medium.

The DVD system comprises nonvolatile memory that stores content. A DVD control module communicates with the nonvolatile memory, and selectively receives requests for content from at least one of the requester network device and/or the media server. The media server requests a key from the requester network device before sending the requested content and determines an amount of time that is required to receive the key from the HDD system after sending the key request to the HDD system. The media server enables the DVD system to send the requested content to at least one of the HDD system and/or the media server if the key is received within a predetermined period. The predetermined period is approximately equal to a two-hop period. The predetermined period is approximately equal to a single-hop period.

In other features, at least one of the DVD system and/or the media server encrypts the requested content before sending the requested content to the HDD system. At least one of the DVD control module and/or the media server includes usage data in the requested content that is transmitted to the HDD system. The usage data specifies a number of allowable uses. The usage data specifies a duration of allowable usage. The DVD system communicates wirelessly with the network. The DVD system communicates with the network over a wired medium.

A system for distributing content in a network comprises memory means for storing content. Provider network means for providing communicates with the memory means. Media serving means for serving communicates with the provider network means. Requester network means requests a copy of the content. The media serving means determines a local/remote status of the requester network means and selectively enables the provider network means to send a copy of the content to the requester network means when the requester network means requests content and has a local status.

In other features, the provider network means includes a digital versatile disc (DVD) system. The requester network means includes a hard disk drive (HDD) system. The media serving means includes local network determining means for determining the local/remote status of the requester network means. The media serving means determines the local/remote status based on a response time of the requester network means. Server means for serving communicates with the provider network means and stores identification data of local network means. The media serving means determines the local/remote status based on the identification data. Alternately, the media serving means stores identification data of local network means. The identification data comprises medium access control (MAC) addresses of the local network means.

In other features, the HDD system comprises nonvolatile HDD memory means for storing data in a nonvolatile manner and that includes a user accessible section and a hidden section. Hard disk drive control (HDD) means communicates with the HDD nonvolatile memory means, selectively requests and receives content from the media serving means and stores the requested content in the hidden section of the nonvolatile HDD memory means. After sending the request to the media serving means, the HDD control means receives a key request and transmits a key to at least one of the provider network means and the media serving means in response to the key request. The requested content received by the HDD system from at least one of the provider network means and/or the media serving means is encrypted using the key. The HDD control means decrypts the requested content. The requested content includes usage data that is also written to the hidden portion of the nonvolatile HDD memory means and the HDD control means makes the requested content unavailable when the usage data indicates allowable use is over. The HDD system deletes the requested content from the nonvolatile HDD memory means. The usage data specifies a predetermined number of allowable uses. The usage data specifies a duration of allowable usage. The HDD system communicates wirelessly with the network. The HDD system communicates with the network over a wired medium.

In other features, the DVD system comprises nonvolatile memory means for storing content DVD control means that communicates with the nonvolatile memory means, for selectively receiving requests for content from the media serving means. The media serving means requests a key from the requester network means before sending the requested content and determines an amount of time that is required to receive the key from the HDD system after sending the key request to the HDD system. At least one of the DVD control means and/or the media serving means sends the requested content to the HDD system if the key is received within a predetermined period. The predetermined period is approximately equal to a two-hop period. The predetermined period is approximately equal to a single-hop period. At least one of the DVD control means and the media serving means encrypts the requested content before sending the requested content to the HDD system. At least one of the DVD control means and/or the media serving means includes usage data in the requested content that is transmitted to the HDD system. The usage data specifies a number of allowable uses. The usage data specifies a duration of allowable usage. The DVD system communicates wirelessly with the network. The DVD system communicates with the network over a wired medium.

A method for distributing content in a network comprises storing content in memory; providing a provider network device that communicates with the memory; proving a media serving device that communicates with the provider network device; providing a requester network device that requests a copy of the content; determining a local/remote status of the requester network device using the media serving device; and selectively sending a copy of the content to the requester network device when the requester network device requests content and has a local status.

In other features, the provider network device includes a digital versatile disc (DVD) system. The requester network device includes a hard disk drive (HDD) system. The method includes determining the local/remote status of the requester network device. The method includes determining the local/remote status based on a response time of the requester network device. The method includes storing identification data of local network devices. The media serving device determines the local/remote status based on the identification data. The method includes storing medium access control (MAC) addresses of the local network devices.

In other features, the method includes storing data in a nonvolatile manner in user accessible and hidden sections of the HDD system; selectively requesting and receiving content from the provider network device via the media serving device; and storing the requested content in the hidden section of the nonvolatile HDD memory.

In other features, the method includes receiving a key request and transmitting a key to the media serving device in response to the key request after sending the request to the media serving device. The method includes encrypting the requested content received by the HDD system from at least one of the provider network device and/or the media serving device using the key. The method includes decrypting the requested content. The method includes writing the requested content includes usage data to the hidden portion of the nonvolatile HDD memory; and making the requested content unavailable when the usage data indicates allowable use is over.

In other features, the method includes deleting the requested content from the nonvolatile HDD memory. The method includes specifying a predetermined number of allowable uses using the usage data. The method includes specifying a duration of allowable usage using the usage data.

The method includes storing content in the provider network device; and selectively receiving requests for content from the requester network device via the media serving device. The method includes requesting a key from the requester network device before sending the requested content; and determining an amount of time that is required to receive the key from the HDD system after sending the key request to the HDD system. The method includes sending the requested content to the HDD system if the key is received within a predetermined period. The predetermined period is approximately equal to a two-hop period. The predetermined period is approximately equal to a single-hop period. The method includes encrypting the requested content before sending the requested content to the HDD system. The method includes transmitting usage data in the requested content to the HDD system. The usage data specifies a number of allowable uses. The usage data specifies a duration of allowable usage.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
FIG. 1 is a functional block diagram of a provider network device that provides protected digital content to one or more requester network devices in a local network;
FIG. 2 is a functional block diagram of a first exemplary networked DVD and HDD system according to the present invention that communicates with a modem;
FIG. 3 is a functional block diagram of a second exemplary networked DVD and HDD system according to the present invention that communicates with a modem;
FIG. 4 is a functional block diagram of a third exemplary networked DVD and HDD system according to the present invention that communicates with a modem;
FIG. 5 is a functional block diagram of a fourth exemplary networked DVD and HDD system according to the present invention that communicates with a modem;
FIG. 6 is a functional block diagram of an exemplary requester network device including a HDD system;
FIG. 7A is a functional block diagram of an exemplary provider network device including a DVD system with read-only operation;
FIG. 7B is a functional block diagram of an exemplary provider network device including a DVD system with read-write operation;
FIG. 7C is a functional block diagram of a provider or requester network device that includes a combined DVD/HDD system;
FIG. 8 illustrates user accessible and hidden sections of nonvolatile memory of the HDD of FIG. 6;
FIGs. 9A-9D are flowcharts illustrating security steps performed by the provider and/or requester network devices;
FIG. 10 is a flowchart illustrating steps of a method for allowing playback of a copy protected file from the requester network device N times;
FIG. 11 is a flowchart illustrating steps of a method for limiting the amount of time that a copy protected file stored on the requester network device can be played;
FIG. 12A is a functional block diagram of a network including a media server that serves protected content from a provider to a requester;
FIG. 12B is a functional block diagram of a network including a media server that serves protected content from a DVD system to a HDD system;
FIG. 13 illustrates the media server in an exemplary network configuration; and
FIG. 14 is a flowchart illustrating steps performed by the media server according to the present invention.

### DETAILED DESCRIPTION OF THE PREFERRED EMBODIMENTS

The following description of the preferred embodiment(s) is merely exemplary in nature and is in no way intended to limit the invention, its application, or uses. As used herein, the term module or device refers to an application specific integrated circuit (ASIC), an electronic circuit, a processor (shared, dedicated, or group) and memory that execute one or more software or firmware programs, a combinational logic circuit, and/or other suitable components that provide the described functionality. For purposes of clarity, the same reference numbers will be used in the drawings to identify similar elements.

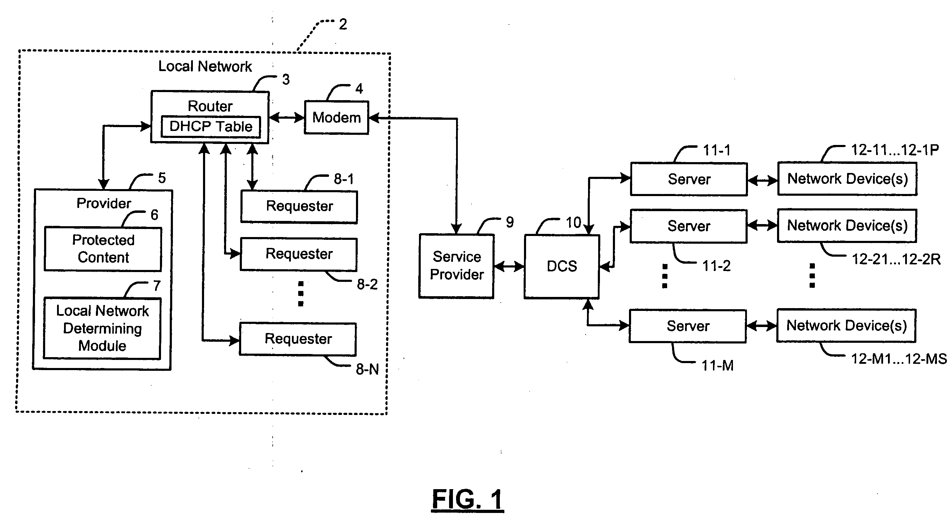

Referring now to FIG. 1, a local network 2 includes a router 3, a modem 4, and a provider network device 5, which selectively provides protected content 6 to one or more local requester network devices as will be described below. The provider network device 5 is a network compatible device that includes a local network determining module 7. One or more requester network devices 8-1, 8-2, ... and 8-N (collectively referred to as requesters 8) selectively request copies of the protected content 6. As can be appreciated, while the router 3 and wire line connections are shown, other network configurations will be apparent to skilled artisans including but not limited to wireless Access Points (AP), ad-hoc network connection configurations, and/or wireless network cbnfigurations. While the provider network device 5 is shown to include memory such as nonvolatile memory for the protected content 6, the protected content 6 may be stored internally and/or externally from the provider network device 5.

The modem 4 is connected to a broadband service provider 9, which provides video content, digital content, a broadband connection to a distributed communications system (DCS) 10, and/or other network services. The service provider 9 may provide broadband access using wired or wireless connections, coaxial cable, digital subscriber line (DSL), satellite and/or any other connection system or method.

The DCS 10 is connected by one or more servers 11-1, 11-2, ..., and 11-M to network devices 12-11, 12-12, ..., 12-1P, 12-21, 12-22, ..., 12-2P, ..., and 12-M1, 12-M2, ..., 12-MP (collectively referred to as network devices 12). The local network determining module 7 selectively determines whether the requester network device has a local or remote status when the requester network device requests a copy of the protected content 6. This approach increases security by preventing access to the protected content by remote network devices.

There are many different ways for the local network determining module 7 to determine the local/remote status of a requester network device. For example in some implementations, the provider network device 5 determines local/remote status by determining the amount of time that is required to receive a response from the requester network device. If the response time is less than a predetermined period, then the requester network device is determined to have a local status. If not, the requester network device has a remote status and the copy of the protected content is denied. The amount of time that is required to send and receive data via the service provider 9, DCS 10 and servers 11 to the remote network devices 12 is significantly greater than the amount of timer required by a local requester network device to respond. In other words, the predetermined period is set greater than the response time required by local requester network devices and less than the response time required by remote requester network devices.

In other implementations, the provider network device checks a dynamic host configuration protocol (DHCP) table in a DHCP server to determine medium access control (MAC) addresses of local network devices. If the requester network device matches a local MAC address in the table, then the requester network device has a local status and the copy of the protected content can be sent. If not, the requester network device has a remote status and the copy of the protected content is not sent.

In still other implementations, the provider network device 5 may send a message to the router 3 to temporarily block external ports of the router 3 or modem 4 to the service provider 9 (and DCS 10). After blocking the external ports, the provider network device 5 determines whether the requester network device is still able to communicate (which will be true if the requester network device has a local status). If the provider network device can communicate with the requesting network device, the provider network device sends the copy protected content. As can be appreciated by skilled artisans, one or more of these approaches may be combined and/or other approaches may be used to determine the local/remote status of the requester network device.

While portions of the following description employ a DVD system and/or a combined DVD/HDD system as the provider network device and another network device including a combined DVD/HDD system and/or a HDD system as the requester network device, skilled artisans will appreciate that other provider and/or requester network devices may be used. Skilled artisans will also appreciate that all of the implementations that are described below in conjunction with DVD and HDD systems can be implemented with any other suitable network devices.

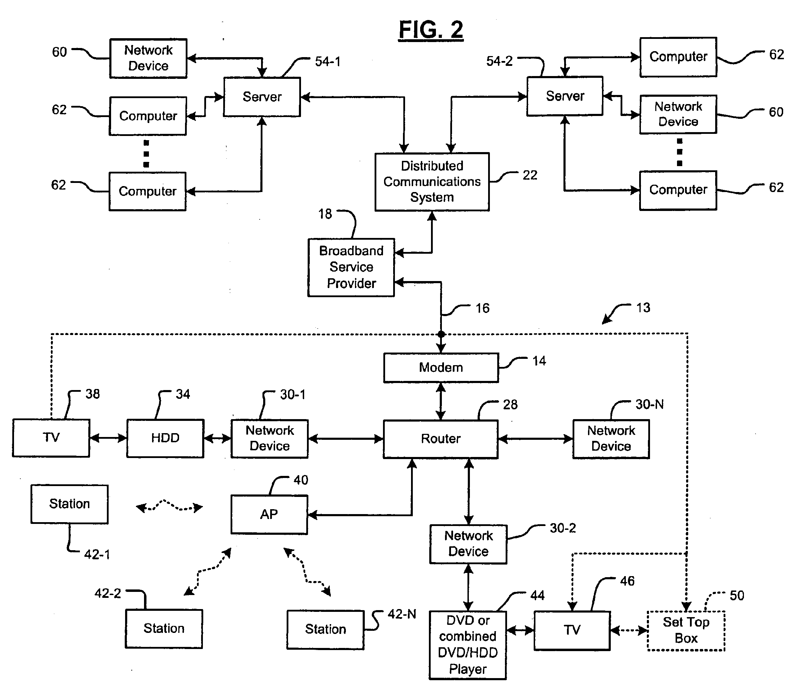

Referring now to FIG. 2, a functional block diagram of a first exemplary networked DVD and HDD system is shown. A local network 13 includes a modem 14 that communicates over medium 16 with a service provider 18. The service provider 18 provides a connection to a distributed communications system (DCS) 22 such as the Internet, LAN, WAN, or other distributed network and/or provides other network services such as video content, telephone services and the like. The modem 14 can be connected to a router 28, which connects multiple network devices 30-1, 30-2, ..., and 30-N (collectively network devices 30) to the modem 14. One of the network devices 30-1 is connected to a hard disk drive (HDD) system 34, which may be connected to a television or monitor 38. The television or monitor 38 may also be connected to the medium 16 either directly or through a set top box (not shown) and receive content from the service provider 18.

The local network 13 may include an access point (AP) 40 that communicates with the router 28 and one or more wireless stations 42-1, 42-2, ..., and 42-N (collectively wireless stations 42). While the AP 40 is shown connected to the router 28, the AP and router functions may be combined in a single device. Alternately, a combined AP/router may be directly connected to the modem 14. Still other types of network configurations and connections will be apparent to skilled artisans.

The network device 30-2 communicates with the router 28 and with a DVD player or a combined DVD/HDD player 44 (both referred to hereinafter as "DVD player 44") such as the one shown and described in U.S. Patent Application Serial No. 11/039,288, filed January 19, 2005, which is hereby incorporated by reference in its entirety. The DVD player 44, in turn, may communicate with a television or monitor 46, which may be connected to the medium 16 or to a set top box 50. The service provider 18 provides broadband access to the DCS 22, video content and/or other services. One or more other servers 54-1 and 54-2, (collectively servers 54) provide an interface for network devices 60, computers 62, personal digital assistants (PDAs), etc. to the DCS 22.

In some implementations, the user of the television or monitor 38 may desire access to DVD content associated with the DVD player 44. Initially, the HDD 34 may request a list of available content from the DVD player. The DVD sends a list of available content. The HDD 34 sends a message to the DVD player 44 via the network requesting a copy of content selected from the list. The DVD system determines whether the HDD system has a local status. If the HDD system or other requester network device has local status, the content file is sent. If the HDD system or other requester network device has a remote status, the request is denied. The local/remote status determination can be made based upon response time, MAC addresses in the DHCP table, external port disconnection and corresponding dialogue, and/or other suitable methods.

In some implementations, the DVD 44 responds by requesting a key from the HDD 34. The DVD 44 begins a timer that determines the amount of time that is required by the HDD 34 to respond. The HDD 34 sends the requested key to the DVD 44. The DVD 44 determines whether the HDD 34 responded within a predetermined amount of time.

If the HDD 34 responds within the predetermined amount of time, the DVD 44 scrambles the selected content with the key and sends the scrambled content over the network to the HDD 34. The HDD 34 descrambles the content with the key and allows replay of the content at the television or monitor 38. As can be appreciated, the key exchange can also occur earlier when the HDD initially requests the list of available content.

The HDD 34 may also receive usage data from the DVD player that constrains use. For example, the usage data may allow N replays and/or replay for a predetermined period. After the allowed usage period is over as specified in the usage data, the HDD 34 makes the video content unavailable. For example, the HDD may delete the video content.

In some implementations, the HDD 34 includes a user accessible section and a hidden section. The video content from the DVD 44 is stored in the hidden section of the DVD 44. The key that is provided by the HDD 34 may be part of a public/private key encryption system and/or other suitable data encryption. Alternately other forms of key-based scrambling can be performed.

If the DVD player is a single DVD player, the DVD sends a list of content available on the DVD in the DVD player. If the DVD player includes a carousel, the DVD player sends a list of DVD content available from DVDs in the carousel. If the DVD player is a combined DVD/HDD player, the DVD/HDD player sends a list of DVD content available on the DVD or DVDs in the player along with DVD content stored on the associated HDD.

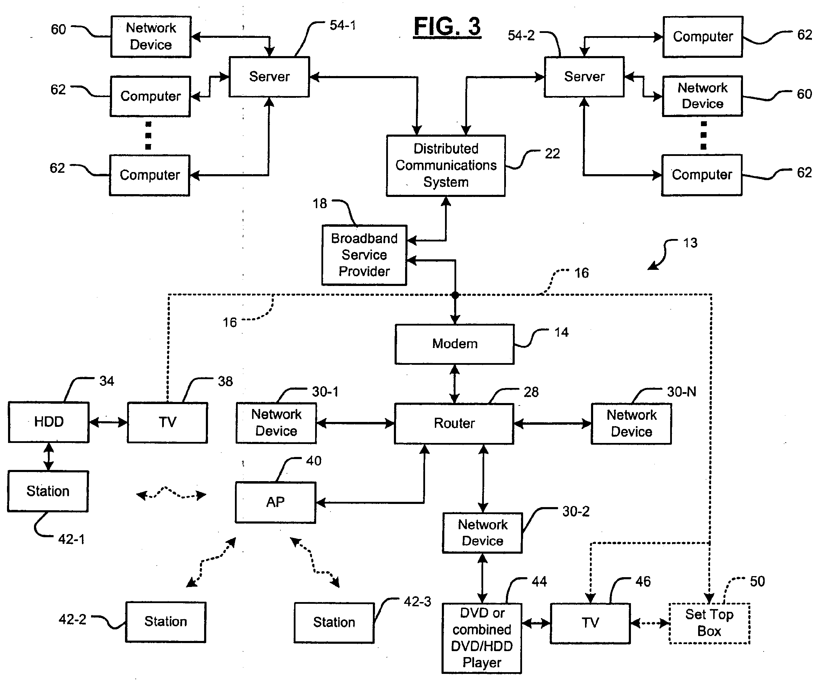

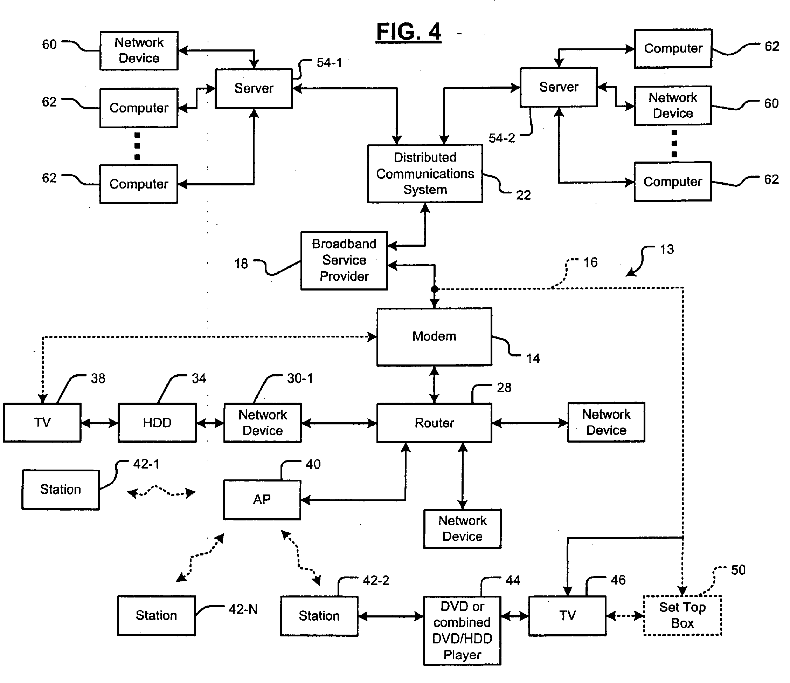

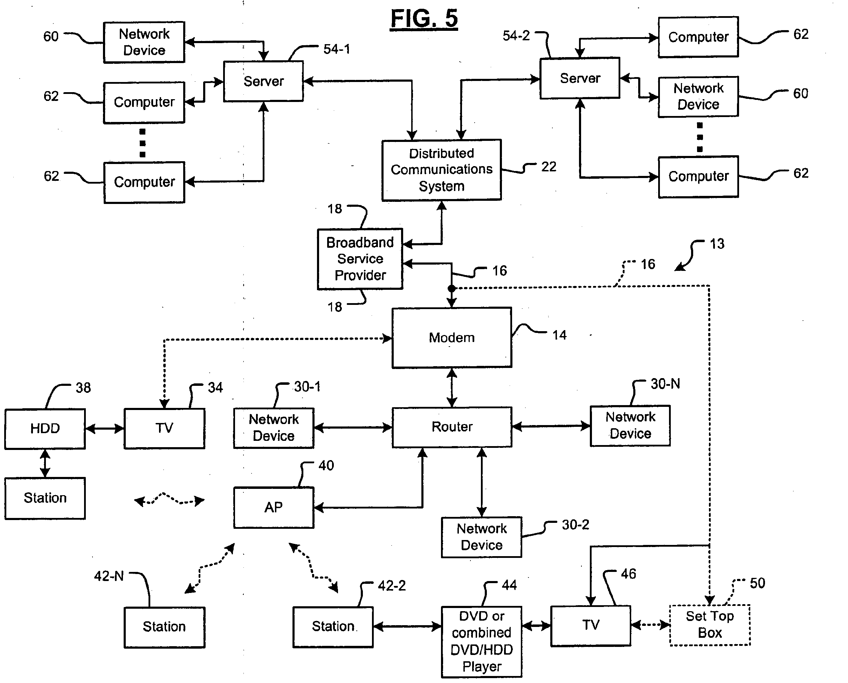

Referring now to FIGs. 3-5, various exemplary configurations of the present invention are shown. In these implementations, the provider network device includes a DVD system and/or a combined DVD/HDD system and the requester network device includes a HDD system and/or a combined DVD/HDD system. In FIG. 3, the HDD 34 is connected to the network by the station 42-1, which wirelessly communicates with the AP 40. The DVD 44 and television 46 are connected by the network device 30-2 and medium 16 to the router 28. In FIG. 4, the HDD 34 is connected by the network device 30-1 and medium 16 to the router 28. The DVD 44 is connected to the network by the station 42-2, which wirelessly communicates with the AP 40. In FIG. 5, the HDD 34 and DVD 44 are connected by one or more stations 42-1 and/or 42-2 to the network. Various other network configurations will be apparent to skilled artisans.

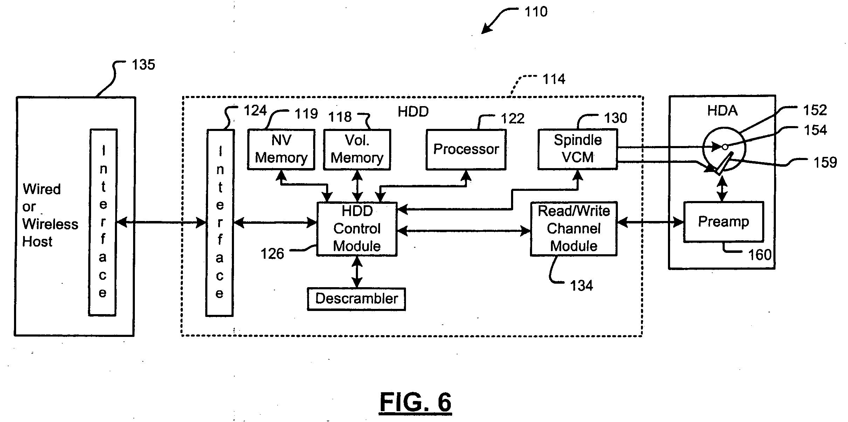

Referring now to FIG. 6, an exemplary requester network device includes a HDD system 110 with a HDD PCB 114. A buffer 118 stores read, write and/or volatile control data that is associated the control of the HDD system 110. The buffer 118 usually employs volatile memory having low latency. For example, SDRAM or other types of low latency memory may be used. Nonvolatile memory 119 such as flash memory may also be provided to store critical data such as nonvolatile control code.

A processor 122 arranged on the HDD PCB 114 performs data and/or control processing that is related to the operation of the HDD system 110. A hard disk control module (HDC) 126 communicates with an input/output interface 124 and with a spindle/voice coil motor (VCM) driver or module 130 and/or a read/write channel module 134. The HDC 126 coordinates control of the spindle/VCM driver 130, the read/write channel module 134 and the processor 122 and data input/output with a host 135 via the interface 124.

During write operations, the read/write channel module 134 encodes the data to be written onto a read/write device 159. The read/write channel module 134 processes the write signal for reliability and may apply, for example, error correction coding (ECC), run length limited coding (RLL), and the like. During read operations, the read/write channel module 134 converts an analog read signal output of the read/write device 159 to a digital read signal. The converted signal is then detected and decoded by known techniques to recover the data that was written on the HDD.

A hard disk drive assembly (HDDA) 150 includes one or more hard drive platters 152 that include magnetic coatings that store magnetic fields. The platters 152 are rotated by a spindle motor that is schematically shown at 154. Generally the spindle motor 154 rotates the hard drive platter 152 at a controlled speed during the read/write operations. One or more read/write arms 158 move relative to the platters 152 to read and/or write data to/from the hard drive platters 152. The spindLe/VCM driver 130 controls the spindle motor 154, which rotates the platter 152. The spindLe/VCM driver 130 also generates control signals that position the read/write arm 158, for example using a voice coil actuator, a stepper motor or any other suitable actuator.

The read/write device 159 is located near a distal end of the read/write arm 158. The read/write device 159 includes a write element such as an inductor that generates a magnetic field. The read/write device 159 also includes a read element (such as a magneto-resistive (MR) element) that senses the magnetic field on the platter 152. The HDDA 150 includes a preamp circuit 160 that amplifies the analog read/write signals. When reading data, the preamp circuit 160 amplifies low level signals from the read element and outputs the amplified signal to the read/write channel module 134. While writing data, a write current is generated that flows through the write element of the read/write device 159. The write current is switched to produce a magnetic field having a positive or negative polarity. The positive or negative polarity is stored by the hard drive platter 152 and is used to represent data.

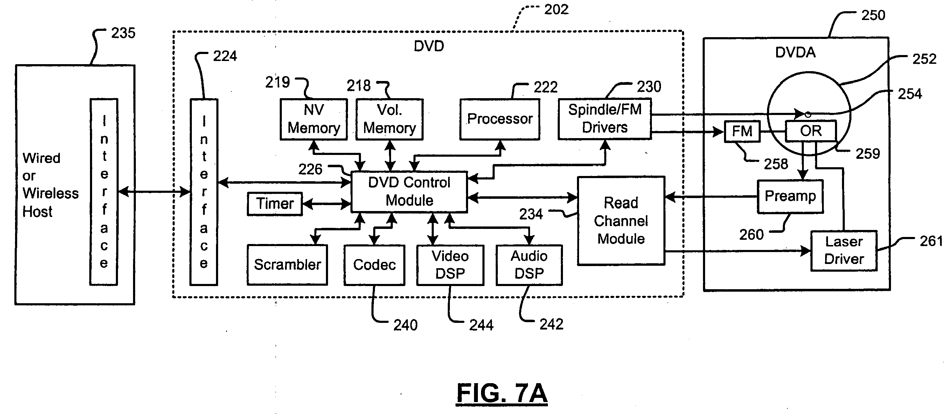

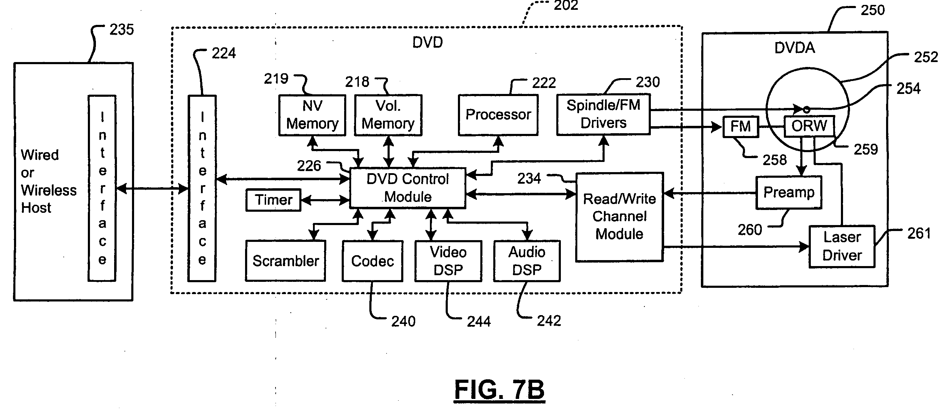

Referring now to FIGs. 7A and 7B, an exemplary provider network device includes a DVD system 210. A DVD PCB 214 includes a buffer 218 that stores read data, write data and/or volatile control code that is associated the control of the DVD system 210. The buffer 218 may employ volatile memory such as SDRAM or other types of low latency memory. Nonvolatile memory 219 such as flash memory can also be used for critical data such as data relating to DVD write formats and/or other nonvolatile control code. A processor 222 arranged on the DVD PCB 214 performs data and/or control processing that is related to the operation of the DVD system 210. The processor 222 also performs decoding of copy protection and/or compression/decompression as needed. A DVD control module 226 communicates with an input/output interface 224 and with a spindle/feed motor (FM) driver 230 and/or a read/write channel module 234. The DVD control module 226 coordinates control of the spindle/FM driver, the read/write channel module 234 and the processor 222 and data input/output via the interface 224.

During write operations, the read/write channel module 234 encodes the data to be written by an optical read/write (ORW) or optical read only (OR) device 259 to the DVD platter. The read/write channel module 234 processes the signals for reliability and may apply, for example, ECC, RLL, and the like. During read operations, the read/write channel module 234 converts an analog output of the ORW or OR device 259 to a digital signal. The converted signal is then detected and decoded by known techniques to recover the data that was written on the DVD.

A DVD assembly (DVDA) 250 includes a DVD platter 252 that stores data optically. The platter 252 is rotated by a spindle motor that is schematically shown at 254. The spindle motor 254 rotates the DVD platter 252 at a controlled and/or variable speed during the read/write operations. The ORW or OR device 259 moves relative to the DVD platter 252 to read and/or write data to/from the DVD platter 252. The ORW or OR device 259 typically includes a laser and an optical sensor.

For DVD read/write and DVD read only systems, the laser is directed at tracks on the DVD that contain lands and pits during read operations. The optical sensor senses reflections caused by the lands/pits. In some DVD read/write (RW) applications, a laser may also be used to heat a die layer on the DVD platter during write operations. If the die is heated to one temperature, the die is transparent and represents one binary digital value. If the die is heated to another temperature, the die is opaque and represents the other binary digital value. Other techniques for writing DVDs may be employed.

The spindle/FM driver 230 controls the spindle motor 254, which controllably rotates the DVD platter 252. The spindle/FM driver 230 also generates control signals that position the feed motor 258, for example using a voice coil actuator, a stepper motor or any other suitable actuator. The feed motor 258 typically moves the ORW or OR device 259 radially relative to the DVD platter 252. A laser driver 261 generates a laser drive signal based on an output of the read/write channel module 234. The DVDA 250 includes a preamp circuit 260 that amplifies analog read signals. When reading data, the preamp circuit 260 amplifies low level signals from the ORW or OR device and outputs the amplified signal to the read/write channel module device 234.

The DVD system 210 further includes a codec module 240 that encodes and/or decodes video such as any of the MPEG formats. Audio and/or video digital signal processors and/or modules 242 and 244, respectively, perform audio and/or video signal processing, respectively.

As with the HDD system 110, portions of the DVD system 210 may be implemented by one or more integrated circuits (IC) or chips. For example, the processor 222 and the DVD control module 226 may be implemented by a single chip. The spindle/FM driver 230 and/or the read/write channel module 234 may also be implemented by the same chip as the processor 222, the DVD control module 226 and/or by additional chips. Most of the DVD system 210 other than the DVDA 250 may also be implemented as a SOC.

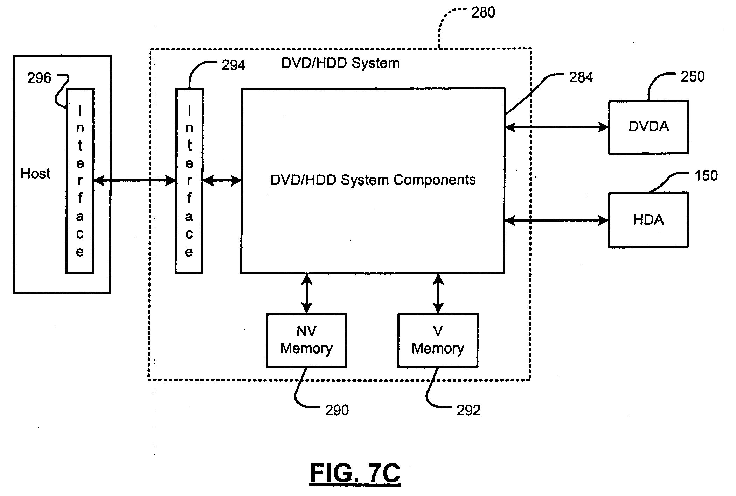

Referring now to FIG. 7C, a simplified functional block diagram of an exemplary combined DVD/HDD system 280 according to some implementations of the present invention is shown. The combined DVD/HDD system can be used as a provider or requester network device. The combined DVD/HDD system 280 includes a combined system control module 284 that communicates with nonvolatile memory 290 and volatile memory 292, which stored data for both DVD and HDD operation. The system control module 284 communicates via an interface 294 with an interface 296 of a host 298. In some implementations, the interfaces 294 and 296 are serial ATA interfaces, Fiber Channels (FC), serial attached small computer system interfaces (SAS), or other suitable interfaces.

The combined DVD/HDD system controls both DVD and HDD systems. The DVD/HDD system reduces overall system cost and provides improved functionality and performance. Cost is reduced through the use of a single DRAM and flash memory for both the DVD and HDD data storage. A single power supply and a reduced number of external connections are required, which further reduces cost.

In addition, the unified DVD/HDD system allows copy protected content to be copied bit-by-bit to directly to the HDD. In other words, the copy protected content can be copied without decrypting the copy protection scheme or digital rights management (DRM) and without requiring significant operating system involvement. Conventional separate DVD and HDD systems require the DVD to decode/decrypt the DRM or other copy protection prior to output. The DRM or other copy protection may or may not allow subsequent copying to the HDD. By combining the systems, additional functionality is provided due to the built-in security of the copy protection or DRM scheme since the DRM or copy protection remains intact. For example, single DVD drive copy operations are supported without removal of the copy protection or DRM. Additionally, the HDD can operate as a virtual DVD changer. Still other variations of the combined DVD/HDD system are shown and described in U.S. Patent Application Serial No. 11/039,288, filed on January 19, 2005.

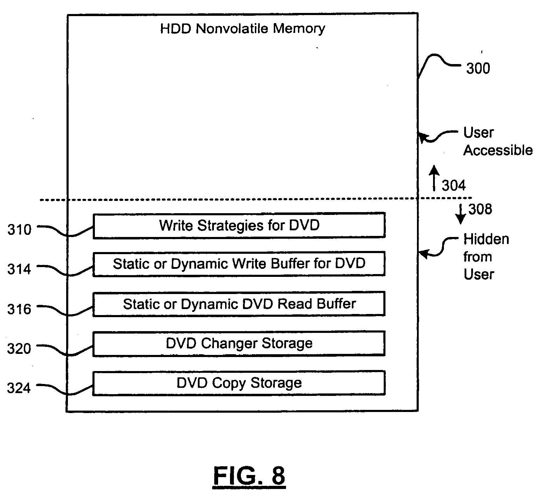

Referring now to FIG. 8, partitioning of the nonvolatile memory 300 of the HDD into user accessible and hidden areas according to some implementations is shown. The nonvolatile memory 300 of the HDD is allocated into a first portion 304 that is user accessible and a second portion 308 that is not user accessible (or hidden). The second hidden portion 308 is used in one or more of the following ways according to some implementations of the invention. The hidden portion 308 is used to store the contents of a DVD that is to be copied. In addition, the hidden portion 308 of the HDD is used to provide a virtual DVD carousel. In other words, multiple DVDs may be copied to the HDD and played back at a later date.

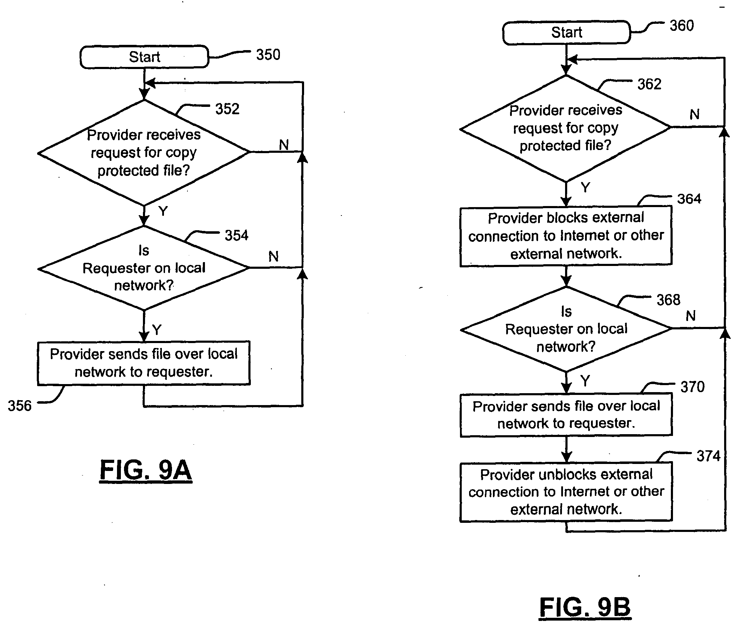

Referring now to FIG. 9A, steps performed by the network devices are shown. Control begins in step 350. In step 352, control determines whether the provider network device receives a request for a copy of protected content. If not, control returns to step 352. If step 352 is true, control determines whether the requester network device is located on the local network in step 354. If step 354 is false, control denies the request and returns to step 352. If step 354 is true, the provider network device sends a copy of the protected content to the requester network device.

The provider network device determines whether the requester network device is on the local network in any suitable fashion. For example, a response time of the requester network device can be compared to a predetermined threshold. In other implementations, the provider network device can temporarily request that the external ports of the router or modem be blocked so that the provider network device can confirm the local/remote status of the requester network device before the file sent. In other implementations, a local server can be queried to determine the local network devices. Still other methods for determining local/remote status may be used.

Referring now to FIG. 9B, steps for determining local/remote status by temporarily blocking an external port are shown. Control begins with step 360. In step 362, control determines whether the provider network device receives a request for a copy protected file. If step 362 is false, control returns to step 362. If step 362 is true, control continues with step 364 where the provider network device requests the external ports of the router or modem to be blocked. In step 368, the provider network device determines whether the requester network device has a local status. For example, the provider network device may send a message to the requester network device and wait for a response. If step 368 is false, the provider network device denies the request and control returns to step 362. If step 368 is true, the provider network device sends a copy of the file to the requester network device in step 370. The provider network device unblocks the external connection or port of the router or modem in step 374.

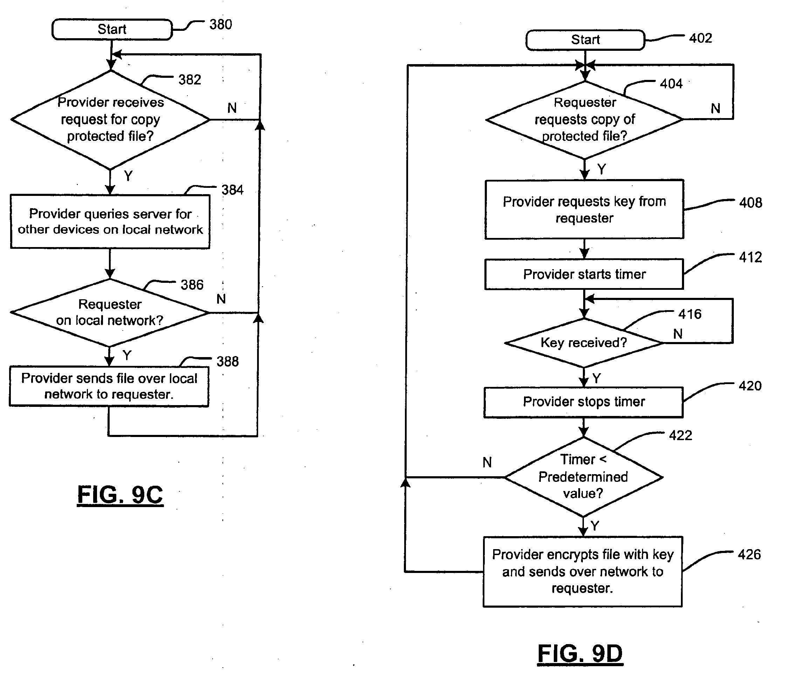

Referring now to FIG. 9C, steps for consulting a local server (such as a DHCP server) to determine the local/remote status are shown. Control begins with step 380. In step 382, control determines whether the provider network device receives a request for a copy protected file. If step 382 is false, control returns to step 382. If step 382 is true, control continues with step 384 where the provider network device queries the server for identification of local network devices. The identification can include MAC addresses although other identification types can be used. In step 386, the provider network device determines whether the requester network device has a local status. If step 386 is false, the provider network device denies the request and control returns to step 382. If step 386 is true, the provider network device sends a copy of the file to the requester network device in step 388.

Referring now to FIG. 9D, steps performed by the network system are shown generally at 400. In step 402, control begins. In step 404, the provider network device determines whether a requester network device requests a copy of the content. If not, control returns to step 404. Otherwise control continues with step 408 and the provider network device requests a key from the requester network device. In step 412, the provider network device starts a timer.

In step 416, the provider network device determines whether the key is received. If the key is not received and (in some implementations) the predetermined period has not been exceeded, control continues with step 416. Otherwise, control continues with step 420 and the provider network device stops the timer. In step 422, control determines whether the timer is less than a predetermined period.

In some implementations, the predetermined period is less than or equal to the amount of time that a packet would require to travel one or two hops. By limiting the response time, additional security is provided. The amount of time that would be required for a computer or other device outside of the home network to respond will exceed the predetermined period. In other words, a packet containing a key from a computer such as computer 62 or other network device such as network device 60 that is connected outside of the home network will exceed one or two hops. This is due to the time required to pass through the modem and the service provider.

If step 422 is false, control returns to step 404. If step 422 is true, the provider network device encrypts or scrambles the content with the key and sends the encrypted or scrambled content over the network to the requesting device in step 426 and control continues with step 404.

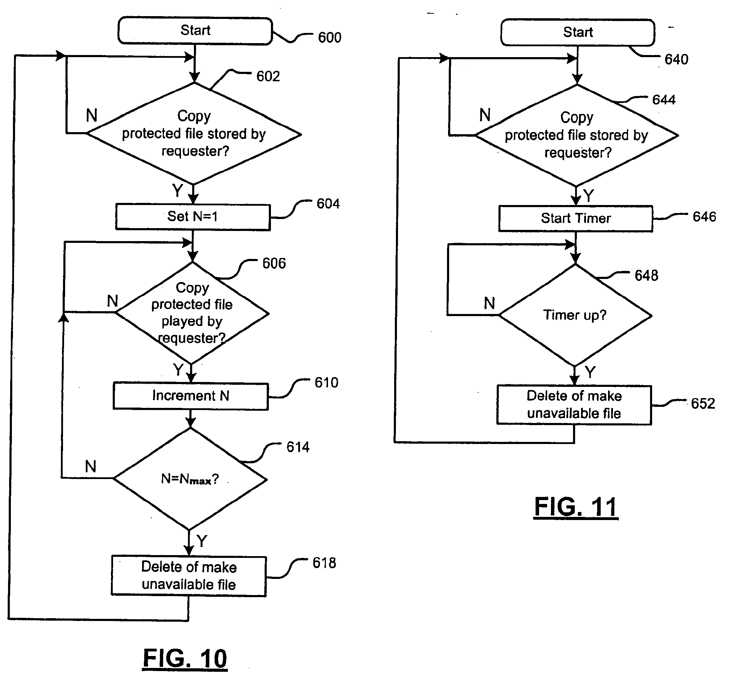

Referring now to FIG. 10, steps of a method for allowing playback of a copy protected file from the requester network device N times are shown. Control begins with step 600. In step 602, control determines whether copy protected files have been stored on the requester network device. If not, control returns to step 602. It step 602 is true, control sets N=1 for the file in step 604. In step 606, control determines whether the copy protected file stored on requester network device has been played. If step 606 is false, control returns to step 606. If step 606 is true, control increments N in step 610. In step 614, control determines whether N = Nₘₐₓ. If step 614 is false, control returns to step 606. If step 614 is true, control deletes or otherwise makes the copy protected file unavailable from the requester network device in step 618 and control returns to step 602.

Referring now to FIG. 11, steps of a method for limiting the amount of time that a copy protected file stored on the requester network device can be played are shown. Control begins with step 640. In step 644, control determines whether the copy protected file has been stored on the requester network device. If step 644 is false, control returns to step 644. Otherwise, control continues with step 646 and sets a timer. In step 648, control determines whether the timer is up. If step 648 is false, control returns to step 648. If step 648 is true, control deletes the copy protected file from the requester network device in step 652 and control continues with step 644. While a timer is described, any usage measurement and/or comparison may be performed. For example, a date and/or time stamp may be used and compared to current data and/or time. Still other usage data types will be apparent to skilled artisans.

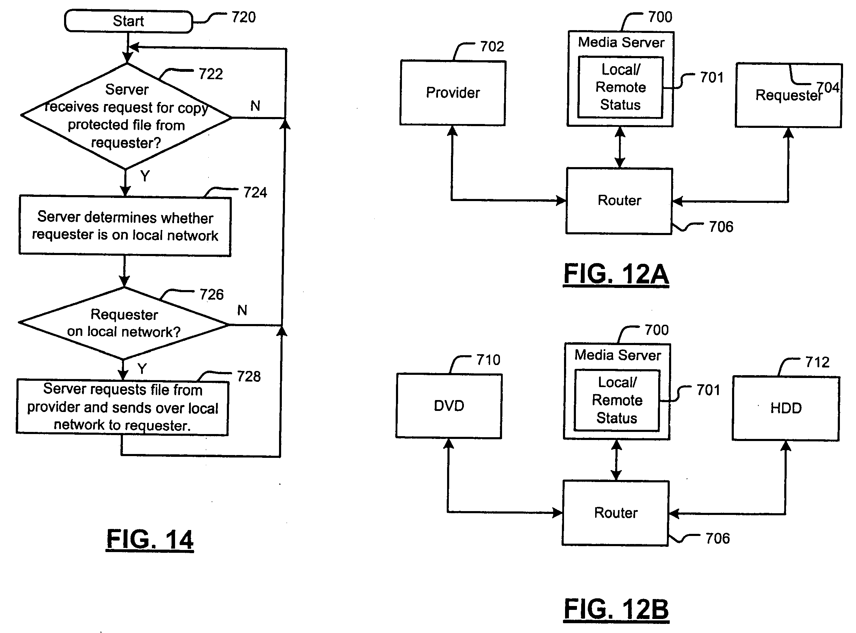

Referring now to FIG. 12A, a media server 700 can be used to serve protected content from a provider 702 to a requester 704. While a router is shown connecting the media server 700, the provider 702 and the requester 704, other network configurations and connections may be used such as but not limited to ad-hoc network modes, peer to peer modes, and other approaches. In some implementations, the media server includes a local/remote status determining module 701, as previously described above. The media server 700 provides a list of available content to the requester 704. The requester 704 requests content. The media server 700 confirms that the requester is on the local network in any of the ways described above. If the requester 704 is on the local network, the media server 700 requests the content from the provider 702. The provider 702 sends the content directly to the requester 704 or to the the media server 700, which sends the content to the requester 704.

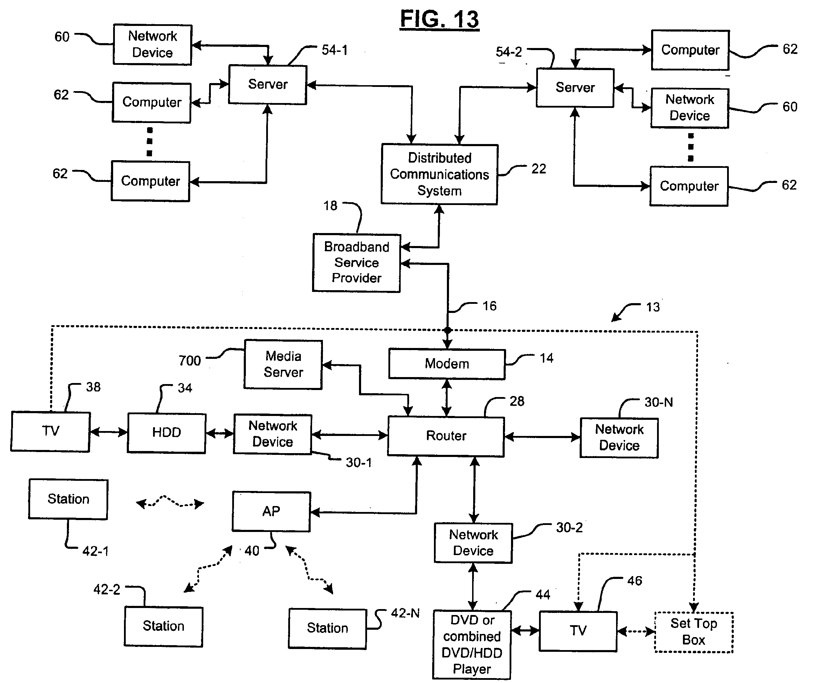

Referring now to FIGs. 12B and 13, the media server 700 serves protected content from a DVD system 710 to a HDD system 712. The DVD system 710 and the HDD system 712 can be implemented as described in the embodiments set forth above. In FIG. 13, the media server 700 can be implemented in a network as shown. Other network configurations such as those described herein as well as other network configurations are contemplated. The media server can be connected to the network in a wired or wireless manner.

Referring now to FIG. 14, a flowchart illustrating steps performed by the media server according to the present invention are shown. Control begins in step 720. In step 722, control determines whether the server receives a request for a copy of a protected file from the requester. If false, control returns to step 722. If true, the media server determines whether the requester has a local status. The local status of the requester may be determined in any of the ways described above. If true, the server requests the file from the provider and sends the file to the requester. Alternately, the provider may send the file directly to the requester.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

## Claims

1. A hard disk drive, HDD, system (8, 110) that communicates with a provider network device (5, 44) over a network (2, 13), comprising:
nonvolatile HDD memory (119) adapted to store data in a nonvolatile manner in user accessible (304) and hidden (308) sections, wherein the hidden sections are not accessible by the user; and
a hard disk drive control, HDD, module comprising means adapted to communicate with said HDD nonvolatile memory, selectively request and receive video content from the provider network device and store said requested video content in said hidden section of said nonvolatile HDD memory, wherein said requested video content includes usage data that is also written to said hidden section of said nonvolatile HDD memory and wherein said HDD control module is further adapted to make said requested content unavailable when said usage data indicates that allowable use of the video content stored in said hidden section is over.

2. The HDD system of Claim 1 wherein said HDD control module further comprises means adapted to receive a key request after sending said request to the provider network device, and transmit a key to the provider network device in response to said key request.

3. The HDD system of Claim 2, wherein said HDD system is further adapted to receive said requested video content encrypted using said key from the provider network device.

4. The HDD system of Claim 3, wherein said HDD control module decrypts said requested content.

5. The HDD system of Claim 1, wherein said HDD system deletes said requested video content from said nonvolatile HDD memory.

6. The HDD system of Claim 1, wherein said usage data specifies a predetermined number of allowable uses.

7. The HDD system of Claims 1, wherein said usage data specifies a duration of allowable usage.

8. The HDD system of Claim 1, wherein said HDD system communicates wirelessly with the network.

9. The HDD system of Claim 1, wherein said HDD system communicates with the network over a wired medium.

10. A networked DVD/HDD system comprising said HDD system of one of Claims 1 to 9 and further comprising said provider network device and said network wherein the provider network device includes a digital versatile disc, DVD, system.

## Patentansprüche

1. Festplattenlaufwerks-, HDD-, System (8, 110), das mit einer Dienstleister-Netzwerkeinrichtung (5, 44) über ein Netzwerk (2, 13) kommuniziert, mit:
einem nicht-flüchtigen HDD-Speicher (119), der zur Speicherung von Daten in einer nicht-flüchtigen Weise in für Anwender zugänglichen (304) und verborgenen (308) Abschnitten ausgebildet ist, wobei die verborgenen Abschnitte für den Anwender nicht zugänglich sind; und
einem Festplattenlaufwerks-, HDD-, Steuermodul mit einer Einrichtung, die ausgebildet ist, mit dem nicht-flüchtigen HDD-Speicher zu kommunizieren, selektiv Video-Inhalt aus der Dienstleister-Netzwerkeinrichtung anzufordern und zu erhalten und den angeforderten Video-Inhalt in dem verborgenen Abschnitt des nicht-flüchtigen HDD-Speichers zu speichern, wobei der angeforderte Video-Inhalt Nutzungsdaten enthält, die auch in dem verborgenen Abschnitt des nicht-flüchtigen HDD-Speichers gespeichert werden, und wobei das HDD-Steuermodul ferner ausgebildet ist, den angeforderten Inhalt nicht-verfügbar zu machen, wenn die Nutzungsdaten anzeigen, dass eine erlaubte Nutzung des in dem verborgenen Abschnitt gespeicherten Video-Inhalts vorüber ist.

2. HDD-System nach Anspruch 1, wobei das HDD-Steuermodul ferner eine Einrichtung aufweist, die ausgebildet ist, eine Schlüsselanforderung nach Sendung der Anforderung an die Dienstleister-Netzwerkeinrichtung zu empfangen und einen Schlüssel an die Dienstleister-Netzwerkeinrichtung in Reaktion auf die Schlüsselanforderung zu senden.

3. HDD-System nach Anspruch 2, wobei das HDD-System ferner ausgebildet ist, den angeforderten Video-Inhalt, der unter Anwendung des Schlüssels verschlüsselt ist, von der Dienstleister-Netzwerkeinrichtung zu empfangen.

4. HDD-System nach Anspruch 3, wobei das HDD-Steuermodul den angeforderten Inhalt entschlüsselt.

5. HDD-System nach Anspruch 1, wobei das HDD-System den angeforderten Video-Inhalt aus dem nicht-flüchtigen HDD-Speicher löscht.

6. HDD-System nach Anspruch 1, wobei die Nutzungsdaten eine vorbestimmte Anzahl erlaubter Nutzungen angegeben.

7. HDD-System nach Anspruch 1, wobei die Nutzungsdaten eine Dauer einer erlaubten Nutzung angeben.

8. HDD-System nach Anspruch 1, wobei das HDD-System drahtlos mit dem Netzwerk kommuniziert.

9. HDD-System nach Anspruch 1, wobei das HDD-System mit dem Netzwerk über ein verdrahtetes Medium kommuniziert.

10. Vernetztes DVD/HDD-System, das das HDD-System nach einem der Ansprüche 1 bis 9 aufweist, und ferner die Dienstleister-Netzwerkeinrichtung und das Netzwerk umfasst, wobei die Dienstleister-Netzwerkeinrichtung ein Digitalvielseitigkeitsdisketten-, DVD-, System aufweist.

## Revendications

1. Système de disque dur, HDD, (8, 110) qui communique avec un dispositif de fournisseur en réseau (5, 44) sur un réseau (2, 13), comprenant :
une mémoire non volatile de disque HDD (119) conçue pour stocker des données de manière non volatile dans des sections utilisateur accessibles (304) et cachées (308), les sections cachées n'étant pas accessibles par l'utilisateur, et
un module de commande d'unité de disque dur, HDD, comprenant un organe conçu pour communiquer avec ladite mémoire non volatile de disque HDD, pour demander sélectivement et recevoir un contenu vidéo provenant du dispositif de fournisseur en réseau et pour stocker ledit contenu vidéo demandé dans ladite section cachée de ladite mémoire non volatile de disque HDD, ledit contenu vidéo demandé incluant des données d'utilisation qui sont également écrites sur ladite section cachée de ladite mémoire non volatile de disque HDD et ledit module de commande de disque HDD étant en outre conçu pour rendre ledit contenu demandé indisponible lorsque lesdites données d'utilisation indiquent qu'une utilisation autorisée du contenu vidéo stocké dans ladite section cachée est révolue.

2. Système de disque HDD selon la revendication 1, dans lequel ledit module de commande de disque HDD comprend en outre un organe conçu pour recevoir une demande de clé après avoir envoyé ladite demande au dispositif de fournisseur en réseau, et pour transmettre une clé au dispositif de fournisseur en réseau en réponse à ladite demande de clé.

3. Système de disque HDD selon la revendication 2, ledit système de disque HDD étant en outre conçu pour recevoir ledit contenu vidéo demandé crypté en utilisant ladite clé provenant du dispositif de fournisseur en réseau.

4. Système de disque HDD selon la revendication 3, dans lequel ledit module de commande de disque HDD décrypte ledit contenu demandé.

5. Système de disque HDD selon la revendication 1, ledit système de disque HDD supprimant ledit contenu vidéo demandé de ladite mémoire non volatile de disque HDD.

6. Système de disque HDD selon la revendication 1, dans lequel lesdites données d'utilisation spécifient un nombre prédéterminé d'utilisations autorisées.

7. Système de disque HDD selon la revendication 1, dans lequel lesdites données d'utilisation spécifient une durée d'utilisation autorisée.

8. Système de disque HDD selon la revendication 1, ledit système de disque HDD communicant sans fil avec le réseau.

9. Système de disque HDD selon la revendication 1, ledit système de disque HDD communiquant avec le réseau sur un support câblé.

10. Système de disque DVD / HDD en réseau comprenant ledit système de disque HDD conforme à l'une des revendications 1 à 9 et comprenant en outre ledit dispositif de fournisseur en réseau et ledit réseau, le dispositif de fournisseur en réseau incluant un système de disque numérique polyvalent, DVD.
